# EUROPÄISCHE PATENTSCHRIFT

(11) **EP 1 005 936 B1**
(45) Veröffentlichungstag und Bekanntmachung des Hinweises auf die Patenterteilung: **11.06.2003**
(21) Anmeldenummer: 99117641.3
(22) Anmeldetag: 08.09.1999
(51) Int. Cl.: B23B 31/30, B23B 31/107, B23Q 11/00, B23Q 1/00, B23H 7/26

(54) **Ausblas- und Ausspritzeinrichtung für Schnellspannzylinder mit Deckel**
Device for blowing or flushing on quick clamping cylinders with cover
Dispositif de chasse par fluide pour cylindre de serrage rapide avec couvercle

(30) Priorität: 14.09.1998 DE 19841928
(43) Veröffentlichungstag der Anmeldung: 07.06.2000
(73) Patentinhaber: Stark Spannsysteme GmbH, 6840 Götzis (AT)
(72) Erfinder: Stark, Emil, 6840 Götzis (AT)
(74) Vertreter: von Ahsen, Erwin-Detlef, Dipl.-Ing.

(56) Entgegenhaltungen:
- DE-A- 19 834 040
- DE-U- 29 615 613

## Beschreibung

Die vorliegende Erfindung betrifft ein Verfahren und eine Vorrichtung zum Ausblasen und Ausspritzen von Verunreinigungen, nach dem Oberbegriff der Ansprüche 1 und 8.

Schnellspannzylinder sind bspw. aus den, auf den selben Anmelder zurückgehenden Anmeldungen, DE-GM 296 15 613.2, CH-PT 03308/92-9, DE-PT 4341743.4-14, DE-GM 297 02 577.5, DE-GM 9321332.8, DE-PT 198 06 961.8 und DE-PT 189 34 040.0 bekannt.

In der DE-GM 296 15 613.2 (nächstliegender stand der Technik) wird eine Spannvorrichtung zum Spannen eines Schnellspannzylinders beschrieben. In der CH-PT 03308/92-9 wird eine Spannvorrichtung zum Spannen einer Aufspannplatte beschrieben, in der DE-PT 43 41 743.4-14 wird eine Aufspannplatte für eine Spannvorrichtung beschrieben und beide Vorrichtungen bauen auf einem Schnellspannzylinder, dessen Gegenstand auf den Anmelder zurückgeht, auf. In der DE-GM 297 02 577.5 wird ein Schnellspannzylinder mit einer zentralen Ablaufbohrung beschrieben, In der DE-GM 9321332. 8 wird ein Einzugsbolzen zur Befestigung an einer Palette beschrieben, in der DE-PT 198 06 961.8 wird ein Schnellspannzylinder zum Einziehen und Zentrieren beschrieben. Die DE-PT 198 34 040.0 beschreibt einen Schnellspannzylinder mit einem einteiligen Gehäuse, bei dem bereits Ausblaseinrichtungen vorhanden sind.

Die bisher aufgeführten Druckschriften zum Stand der Technik zeigen die Entwicklungsschritte im Bereich Schnellspannzylinderbau auf. In den angegebenen Druckschriften sind für den jeweiligen Entwicklungsstand massgebliche Merkmale zur Verbesserung in der Handhabung dieser Technik aufgeführt.

In der DE-PT 198 34 040.0 wird ein neuartiger Schnellspannzylinder ohne verschraubtem Deckel beschrieben, bei dem die Funktionseinheiten von der Bodenseite des Schnellspannzylinders her eingebaut werden und durch einen mit einem Seger-Ring fixierten Boden fixiert und verschlossen werden. Bei einigen Ausführungsformen der in dieser Patentschrift beschriebenen Erfindung werden bereits Ausblaseinrichtungen für einen Schnellspannzylinder beschrieben. Diese Ausführungsformen unterscheiden sich in erster Linie durch die unterschiedlichen Formen des den Schnellspannzylinder verschliessenden Bodens.

Bedingt durch unterschiedliche Ausführungsformen des Bodens ergeben sich unterschiedliche Ausführungsformen des Ausblassystems. Dieses Ausblassystem stellt jedoch nur einen ersten Entwicklungsschritt in die Richtung qualitativ höchstwertiger Schnellspannzylinder mit selbstreinigender Einrichtung dar.

Durch die Einbringung einer Ausblaseinrichtung in der DE-PT 198 34 040.0 wird bereits der Vorteil erzielt, dass Metallspäne oder andere Verunreinigungen die durch die Bearbeitung von Werkstücken auf der aufgespannten Palette herrühren, beim bzw. nach dem Abnehmen der Palette vom Schnellspannzylinder selbständig ausgeblasen werden. Ebenfalls wird wenigstens teilweise die Trocknung der Oberfläche des Schnellspannzylinders erreicht.

Die Druckluft, die mit der Ausblaseinrichtung über die Oberfläche des Schnellspannzylinders geführt wird, bläst Verunreinigungen und die Bohremulsion, die während der Bearbeitung zur Schmierung und Kühlung auf die zu bearbeitenden Werkstücke gespritzt wird, von dieser weg. Emulsionsrückstände verursachen nach dem Eintrocknen einen Klebeeffekt, durch den kleine Späne und Verunreinigungen, die bei der Bearbeitung von Werkstücken entstehen, auf der Oberfläche des Schnellspannzylinders bzw. auf der Oberfläche der Spannpalette die mit dem Schnellspannzylinder in Berührung kommt, festklebt.

Diese festklebenden oder haftenden Verunreinigungen oder Späne verhindern ein exaktes, planes Aufeinanderfügen der Spannpalette auf den Schnellspannzylinder. Beim Zusammenfügen dieser beiden Bearbeitungseinrichtungen entsteht so eine unzulässige Masstoleranz durch den Summenfehler des dazwischenliegenden Bohrspanes bzw. der Verunreinigung. Bei Bearbeitungstoleranzen im µ-Bereich kann ein solcher Summenfehler einen Bearbeitungsfehler erzeugen, derbewirkt, dass das zu bearbeitende Werkstück ausserhalb der zulässigen Toleranzen liegt.

Ein weiterer Nachteil durch die Verunreinigung von Spänen oder anderen Ablagerungen, bedingt durch die Bearbeitung des Werkstückes, besteht darin, dass die Oberflächen des Schnellspannzylinders bzw. der Palette durch das Verpressen der Verunreinigungen zwischen der Palette und dem Schnellspannzylinder beim Festspannen der Palette auf dem Zylinder in Mitleidenschaft gezogen werden.

Die in der DE-PT 198 34 040.0 in einigen Ausführungsformen beschriebene Ausblaseinrichtung verbessert bereits die Reinigung dieser Flächen, der gewünschte Effekt wird jedoch dadurch noch nicht ausreichend erzielt.

Aufgabe der vorliegenden Erfindung ist es nun, eine Ausblaseinrichtung für einen Schnellspannzylinder mit Deckel so zu gestalten, dass Verunreinigungen der Fixierflächen, also der Oberfläche des Schnellspannzylinders und der Oberfläche der Spannpalette wenigstens in dem Bereich in dem diese beiden plan aufliegen, zusammen mit eindringender Bohremulsion zuverlässig entfernt werden.

Die Lösung der gestellten Aufgabe erfolgt durch das Verfahren und die Vorrichtung der Ansprüche 1 und 8.

Ein wesentliches Merkmal der Erfindung liegt nun darin, dass die Ausblaseinrichtung für den Schnellspannzylinder die Beschleunigung der Fliessgeschwindigkeit der Druckluft bei Verringerung des zur Verfügung stehenden Querschnittes für den Luftaustritt zu Reinigungszwecken nutzt.

Auf dieser Grundlage sowie auf der Erkenntnis, dass es ausreicht, die Spannpalette lediglich auf einzelnen vorbestimmten Punkten des Deckels des Spannzylinders zur Befestigung aufzulegen, wird der Deckel des Spannzylinders mit einzelnen, von der übrigen Oberfläche des Spannzylinders abragenden, sogenannten Inseln ausgestaltet. Diese Inseln sind vorzugsweise kreisförmig am äusseren Ende der Befestigungsfläche des Spannzylinders angeordnet. Durch die Anordnung dieser Inseln ergibt sich der Effekt, dass die Spannpalette nur mehr auf der Oberfläche dieser Inseln aufliegt und dadurch die Berührungsflächen zwischen Spannzylinder und Befestigungspalette sich gravierend verringern.

Eine Folge dieser Verringerung der Berührungsflächen zwischen Spannzylinder und Befestigungspalette ist, dass die Fläche, die zur massgenauen Bearbeitung der auf der Palette aufgespannten Werkstückenenutzt wird, bezüglich der Verunreinigungen auf ein Minimum schrumpft.

Daraus ergeben sich zwei Vorteile:
1. Auf den verringerten Berührungsflächen können sich logischerweise nur entsprechend weniger Verunreinigungen oder Späne ablagern. Gleiches gilt natürlich auch für die Bohremulsion.
2. Durch die Anordnung von Ausblasbohrungen ungefähr in der Mitte dieser Inseln ergibt sich beim zusammenfügen bzw. Trennen der Palette mit dem Schnellspannzylinder eine sehr hohe Fliessgeschwindigkeit, die über die gesamte Oberfläche dieser Inseln einigermassen gleichmässig auftritt und die Druckluft durch diese hohe Fliessgeschwindigkeit Verunreinigungen bzw. Späne, die vor dem Zusammenfügen von Schnellspannzylinder und Palette evtl. in diesen Bereichen festkleben, von diesen wegblasen und somit die Oberfläche der beiden Einheiten reinigen.

Verunreinigungen oder Bohrspäne sowie Bohremulsion treffen die Berührungsflächen zwischen Schnellspannzylinder und Palette in der Regel beim Entriegeln der Palette vom Schnellspannzylinder. Um nun diese Flächen von Verunreinigungen frei zu halten, wird der Schnellspannzylinder über den Druckluftanschluss vor dem Lösen der Palette mit Druckluft beaufschlagt. Durch die Beaufschlagung mit Druckluft entströmt aus den nichtverschlossenen Düsen bereits vorab Druckluft, die Bohremulsion und evtl. eingedrungene Verunreinigungen oder Bohrspäne aus dem Bereich in dem solche Düsen angeordnet sind, werden wegblasen.

Beim Entriegeln des Einzugsnippels des Schnellspannzylinders und damit der Palette entsteht ein Abstand zwischen den Auflageflächen auf dem Schnellspannzylinder, also den erwähnten Inseln, und den entsprechenden Stellen an der Auflagefläche der Palette. Wie bereits vorher erwähnt, ergibt sich bei einem sehr geringen Querschnitt für die Ausströmung der Druckluft eine sehr hohe Fliessgeschwindigkeit, die nun in dem Bereich zwischen der Oberfläche der Inseln des Schnellspannzylinders und der Berührungsfläche der Palette mit diesen Inseln auftritt. Diese Druckluftströmung mit sehr hoher Fliessgeschwindigkeit bläst nun zuerst über die Oberfläche der Insel und anschliessend in die durch Abtragung bei der Herstellung erzeugte,tiefer liegende restliche Oberfläche des Schnellspannzylinders.

Durch diesen so entstehenden Düseneffekt werden sowohl Bohremulsion als auch Verunreinigungen und Bohrspäne, die während der Bearbeitung der auf der Palette aufgespannten Werkstücke in diesen Bereich eingedrungen sind, ausgeblasen. Somit wird bei der Trennung der Palette vom Schnellspannzylinder eine automatische Reinigung der betroffenen Flächen erreicht.

Wichtig für diesen Vorgang ist, dass die Druckluft relativ gleichmässig über die Oberfläche des Schnellspannzylinders verteilt ausgeblasen wird. Diese Verteilung der Druckluft wird durch ein speziell angeordnetes Druckluftversorgungssystem im inneren des Spannzylinders erreicht.

Dieses Druckluftversorgunssystem setzt sich im wesentlichen aus dem Druckluftanschluss, Quer- und Kreuzbohrungen, Querkanälen, rundumlaufenden Einstichen, Querkanälen und Ausblasbohrungen zusammen. Die Ausblasbohrungen können dabei sowohl an verschiedenen Positionen, als auch durch entsprechende Zusatzeinrichtungen wie z.B. einem Ausblasring im Schnellspannzylinder angeordnet sein.

Über Querkanäle, Kreuzbohrungen, Einstiche sowie einer Düse zur groben Regulierung der Druckluft im Druckluftversorgungssystem wird die Druckluft an die entsprechenden Ausblasbohrungen geleitet.

Im wesentlichen unterscheiden sich bei der vorliegenden Erfindung zwei Arten von Ausblasbohrungen. Die erste Art der Ausblasbohrung stellt die bereits näher beschriebene Ausblasbohrung dar, die erst nach Entriegelung der Palette vom Schnellspannzylinder durch den Trennvorgang der Palette vom Schnellspannzylinder Druckluft ausblasen kann.

Die zweite Art der Ausblasbohrungen sind im Grunde von ähnlicher Art, die jedoch so angeordnet sind, dass sie bereits vor der Entriegelung der Spannpalette eine Verbindung mit der Umgebungsluft aufweisen und damit sofort nach Beaufschlagung des Druckluftversorgungssystems mit Druckluft ihre Ausblasfunktion ausführen. Durch die bereits vor der Entriegelung des Nippels bzw. der Spannpalette eingeleitete Ausblasung erfolgt bereits eine Vorreinigung des Spaltes zwischen Schnellspannzylinder und Palette, bzw. entsteht durch die Vorabbeaufschlagung von Druckluft ein Überdruck im Bereich zwischen Schnellspannzylinder und Palette der die zugeführte Druckluft nach Aussen über den Rand des Schnellspannzylinders hinaus ausströmen lässt.

Durch dieses Ausströmen werden herabfallende Späne oder Verunreinigungen sowie Bohremulsion, die sich noch auf der Palette oder den darauf aufgespannten Werkstücken befindet, radial nach aussen von der axialen Zylindermitte weggeblasen. Somit entsteht ein Druckluftstrom, der die erwähnten Verunreinigungen oder Bohrspäne und auch die Bohremulsion von den Befestigungsflächen femhält.

Nach dem Entspannen des Einzugsnippels und damit der Palette werden die Ausblasbohrungen, die ungefähr in der Mitte der Inseln angeordnet sind, freigegeben, aus denen dann Druckluft entströmt, die den bereits beschriebenen Effekt noch verstärken. Dabei entsteht im ersten Moment der Trennung der Palette vom Schnellspannzylinder die höchste Ausblasgeschwindigkeit der Druckluft aus den Ausblasdüsen, da der Abstand der Palette zum Schnellspannzylinder zu diesem Zeitpunkt am geringsten ist. Mit Zunahme des Abstandes zwischen Palette und Schnellspannzylinder, bzw. den Inseln auf dem Schnellspannzylinder, reduziert sich die Fliessgeschwindigkeit der aus den Ausblasbohrungen der Inseln austretenden Druckluft. Der so entstehende Überdruck im Bereich des Schnellspannzylinders reicht aus, um auftreffende Verunreinigungen, Bohrspäne oder noch abtropfende Emulsion vom Schnellspannzylinder femzuhalten.

Die Ausblasbohrungen die bereits während der Verspannung der Palette mit dem Schnellspannzylinder freien Austritt für die eingeleitete Druckluft ermöglichen, sind ebenfalls ungefähr kreisförmig um die axialen Mitte des Schnellspannzylinders auf der Oberfläche, die der zu spannenden Palette zugeordnet ist, angeordnet. Die Aufteilung bzw. Anordnung der Ausblasbohrungen auf dem ungefähr ringförmigen Abstand der axialen Mitte des Schnellspannzylinders kann wahlweise symmetrisch oder auch unsymmetrisch angeordnet sein. Die Öffnung dieser Ausblasbohrungen sind axial von oben auf den Ausblaszylinder gesehen tiefer liegend angeordnet, als die Öffnungen der Ausblasbohrungen, die ungefähr in der Mitte der Inseln angeordnet sind. Dies beruht darauf, dass der Schnellspannzylinder bei der Fertigung zuerst plan abgedreht wird und anschliessend die Inseln, die zur Auflage der Palette dienen, durch Abtragen der restlichen Oberfläche des Schnellspannzylinders geschaffen werden. Nach Abtragung des restlichen Materials der Oberfläche des Schnellspannzylinders stehen diese Inseln mit entsprechendem Abstand von der übrigen Oberfläche nach oben ab.

In diesen Inseln können nun auch Bohrungen angeordnet sein, in denen die Befestigungsschrauben die den Deckel des Schnellspannzylinders mit seinem Gehäuse verbinden.

In einer besonderen Ausführungsform der vorliegenden Erfindung werden diese Befestigungsschrauben ebenfalls zur Ausblasung von Druckluft mit verwendet. Bei dieser Ausführungsform wird über einen rundumlaufenden Einstich im Deckel des Schnellspannzylinders Druckluft in den Bereich der Schraubenbohrung zugeführt.

Über speziell angeordnete Bohrungen in den Schrauben und durch entsprechend gross ausgeführte Bohrungen im Deckel des Schnellspannzylinders werden diese Bohrungen in den Schrauben und auch Längsnuten im Schraubenkopf mit Druckluft zum Ausblasen versorgt. Damit die Längsnut in den Schrauben mit Druckluft versorgt werden kann, wird an der Auflagefläche des Schraubenkopfes an bestimmten Positionen, die mit den Längsnuten korrespondieren, eine Quemut eingefräst. So kann nun die Druckluft, die aus dem ringsumlaufenden Einstich im Deckel des Schnellspannzylinders entströmt, über das Gewinde der Befestigungsschraube und einem Durchlas, der zwischen der Bohrung und der Schraube vorhanden ist, sowohl in die Bohrungen der Schraube als auch in die Quer- und Längsnut des Schraubenkopfes ausströmen. Dadurch entströmt Druckluft sowohl im Zentrum des Schraubenkopfes als auch um diesen herum. Ein Vorteil dieser Konstruktion besteht darin, dass die Druckluft bereits um den Schraubenkopf herum verteilt ist und somit ein gleichmässiges Luftpolster nach dem Abheben der Palette erzeugt. Die zentrale Bohrung in der Schraube unterstützt dieses Luftpolster zusätzlich.

Eine weitere Ausführungsform der vorliegenden Erfindung sieht vor, dass zusätzlich zu der bisher beschrieben Anordnung von Ausblasbohrungen ein Ausblasring entweder innerhalb oder auch ausserhalb der Inseln angeordnet wird. Dieser Ausblasring wird über wenigstens eine Querbohrung und wenigstens eine Kreuzbohrung mit dem Druckluftversorgungssystem verbunden.

Eine weitere Ausführungsform der vorliegenden Erfindung sieht vor, dass der Einzugsnippel ebenfalls mit einer Längs- und wenigstens einer Querbohrung versehen ist. Diese Längsbohrung geht axial durch den Nippel hindurch und versorgt die Querbohrung, die wahlweise einfach oder mehrfach radial von aussen nach innen um den Umfang des Nippels zur Längsbohrung hin angeordnet sind, mit Druckluft.

Die Anordnung dieser Querbohrungen ist so ausgeführt, dass diese bei eingezogenem Nippel durch die Wandung der Bohrung für den Nippel in Schnellspannzylinder verschlossen sind. Bei der Entriegelung des Nippels werden diese Bohrungen freigegeben und Druckluft kann rundum aus den Querbohrungen entströmen und Verunreinigungen, Späne und Bohremulsion ausblasen. Der so beschriebenen Einzugsnippel ist einstückig ausgearbeitet und hat an seinem für die Palette vorgesehenem, als Dorn ausgeführtem Aufnahmeende eine zentrale Bohrung zur Aufnahme der Befestigungsschraube für die Palette.

Eine weitere Ausführungsform der vorliegenden Erfindung sieht einen Einzugsnippel vor, der 2-teilig ausgestaltet ist, wobei der Einzugsnippel aus einem Nippel und einem für die Verankerung der Palette zugeordneten zylindrischen Bundanschlag besteht, die mit einer Befestigungsschraube verbunden sind. In diese Befestigungsschraube werden nun ebenfalls Längs- und Querbohrungen angeordnet, die eine Zufuhr von Druckluft mit der eben beschriebenen Auswirkung ermöglichen. Die Zufuhr der Druckluft erfolgt bei dieser Ausführungsform jedoch geringfügig anders, da dieser Nippel zweiteilig ausgestaltet ist, und dadurch eine etwas andere Luftführung notwendig wird.

Die Luftführung erfolgt in diesem Einzugsnippel ebenfalls durch Einstich, Querbohrung und Längsbohrung. Die Funktionsweise ist jedoch, wie bereits erwähnt, die gleiche wie beim einstückigen Einzugsnippel.

Eine wichtige Funktion dieser Druckluftführung im Einzugsnippel besteht zusätzlich darin, dass der Luftdruck der Druckluft im Druckluftversorgungssystem durch das Abblasen der Druckluft über die Querbohrungen des Nippels schlagartig reduziert wird. Dadurch besteht der Vorteil, dass der Einzugsnippel unter Beaufschlagung von Druckluft über seine wirksame Fläche, also dem Querschnitt der Unterseite des Einzugsnippels, der mit Druckluft beaufschlagt wird, sofort eine nachlassende Kraft erfährt, sobald die Druckluft über die Querbohrungen abblasen kann. Durch diese Einrichtung wird verhindert, dass der Einzugsnippel bei Beaufschlagung mit Druckluft geschossartig aus seiner ihm zugeordneten Bohrung aus dem Schnellspannzylinder herausschiesst. Das bedeutet also, dass diese Bohrungen im Einzugsnippel sowohl eine funktionelle als auch eine sicherheitstechnische Einrichtung darstellen.

Die im Boden des Kolben angeordnete Düse hat zwei Funktionen. Erstens versorgt sie die Längsbohrung des Einzugsnippels mit Druckluft, die sie über eine Querbohrung und eine Kreuzbohrung aus dem Druckluftanschluss erhält. Zweitens wird anhand dieser Düse eine grobe Einstellung des Luftdrucks des Druckluftversorgungssystems bewirkt. Entsprechend des Durchmessers der Bohrung der Düse entströmt dieser mehr oder weniger Druckluft, und dadurch wird der Luftdruck im übrigen Druckluftversorgungssystems entsprechend angepasst.

Bei einer weiteren Ausführungsform der vorliegenden Erfindung ist es vorgesehen, daß die Reinigung der betroffenen Berührungsflächen und der Zwischenräume vorab durch ausspritzen mit gefilterter Bohremulsion durchgeführt wird, da der anwendungsseitig, standardmässig zur Verfügung stehende Luftdruck von 6 bar nicht in jedem Anwendungsfall für den erwünschten, reinigenden Effekt ausreicht. Die inkompressible Bohremulsion bewirkt einerseits bereits durch die größere Masse eine bessere Reinigungswirkung als die Druckluft, und sie kann andererseits, durch eine entsprechende Einrichtung, zusätzlich mit höherem Druck beaufschlagt werden, der eine weitere Verbesserung bei der Reinigung der betreffenden Stellen bewirkt. Anschliessend wird das mit der gefilterten Bohremulsion durchspülte Druckluftversorgungssystem mit Druckluft ausgeblasen und trockengelegt.

Die vorliegende Erfindung wird nun im folgenden anhand mehrerer eine bzw. mehrere Ausführungsformen der vorliegenden Erfindung darstellenden Zeichnungen näher erläutert.

Es zeigen:
- Figur 1:: einen Querschnitt eines Schnellspannzylinders mit Deckel und aufgespannter Palette
- Figur 1.1:: einen Ausschnitt aus Figur 1
- Figur 2:: eine Draufsicht auf einen Schnellspannzylinder
- Figur 3:: einen Querschnitt eines Deckel eines Schnellspannzylinders
- Figur 3.1:: die Unteransicht einer Befestigungsschraube
- Figur 4:: einen Querschnitt des Deckels eines Schnellspannzylinders
- Figur 4.1:: einen Ausschnitt aus Figur 4
- Figur 5:: eine Schnittdarstellung eines Deckels eines Schnellspannzylinders
- Figur 5.1:: einen Ausschnitt aus Figur 5
- Figur 5.2:: Draufsicht auf einen Zentrierring
- Figur 5.3:: eine Schnittdarstellung eines Zentrierringes
- Figur 6:: eine Ausführungsform eines Einzugsnippels
- Figur 7:: eine Ausführungsform eines Einzugsnippels
- Figur 8:: einen Querschnitt des Deckkels eines Schnellspannzylinder in einer weiteren Ausführungsform
- Figur 9:: einen Querschnitt eines Deckels eines Schnellspannzylinders in einer weiteren Ausführungsform
- Figur 10:: die Draufsicht in geschnittener Darstellung auf die Ausführungsformen nach den Figuren 8 und 9.

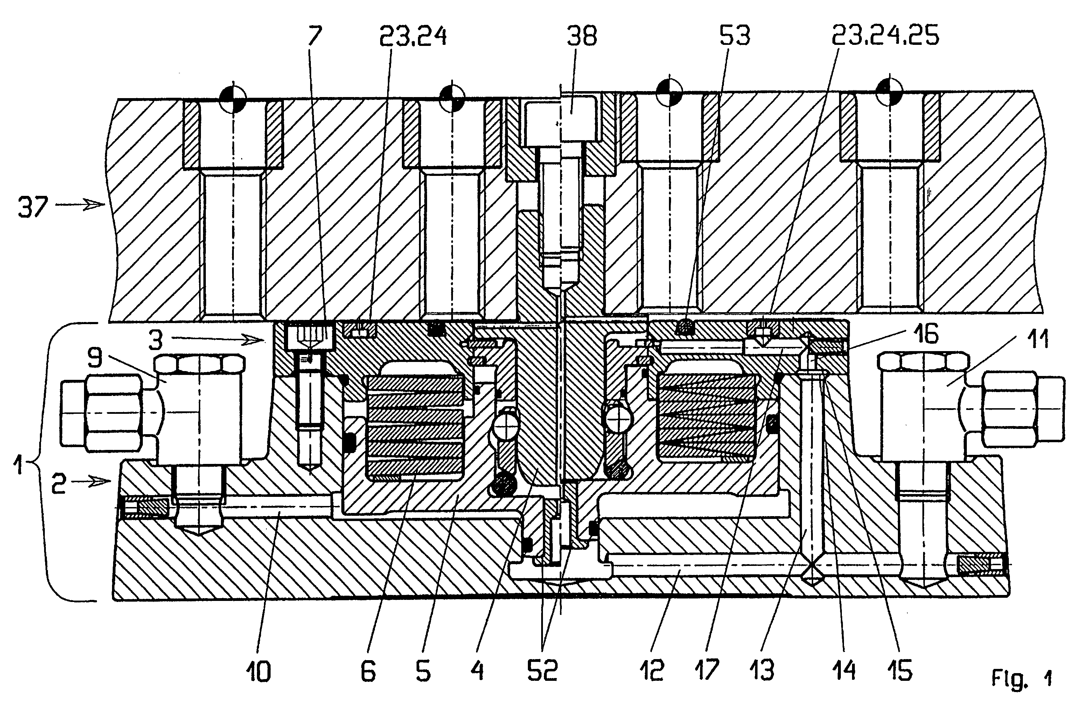

In Figur 1 ist ein Schnellspannzylinder 1 mit einem Deckel 3 und einer aufgespannten Schnellspannpalette dargestellt. In der linken Hälfte der Figur ist die Schnellspannpalette fixiert dargestellt, und in der rechten Hälfte der Figur ist die Schnellspannpalette in entspanntem Zustand gezeigt. Erkennbar ist dies unter anderem am Spannzustand der Spannfedern 6 und an der Position des aus- bzw. eingefahrenen Kolbens 5 des Schnellspannzylinders 1, und weiters am Abstand zwischen der Schnellspannpalette und dem Deckel 3 des Schnellspannzylinders 1. Unabhängig davon sind jedoch die Bohrungen für die Öl- bzw. Luftzufuhr der entsprechenden Versorgungssysteme.

Der Schnellspannzylinder 1 setzt sich in grober Beschreibung aus dem Gehäuse 2 und dem Deckel 3 sowie dem Einziehnippel 4 und dem Kolben 5 mit den Spannfedern 6 zusammen. Der Deckel 3 wird mit den Befestigunsschrauben 7 auf dem Gehäuse 2 dichtend festgeschraubt, so dass diese eine Einheit bilden. Der Ölanschluss 9 dient zur Versorgung mit Hydrauliköl zur Entspannung des Schnellspannzylinders. Das Hydrauliköl fliesst durch den Ölanschluss 9 und durch die Ölzuführbohrung 10 in den Zylinderbereich, so dass bei zunehmendem Öldruck der Kolben des Schnellspannzylinders nach oben gegen die Federkraft der Spannfedern 6 bis zu seinem Anschlag gedrückt wird. Dabei werden der Einziehnippel 4 und die mit der Befestigungsschraube 38 an dem Einziehnippel 4 befestigte Palette 37 entspannt. Bei diesem Entspannvorgang bildet sich eine Distanz zwischen den Berührungsflächen des Schnellspannzylinders und der Palette.

Der Druckluftanschluss 11 versorgt das Druckluftversorgungssystem des Schnellspannzylinders mit Druckluft. Das Druckluftversorgungssystem besteht aus Querkanälen, Kreuzbohrungen, Senkungen und Einstichen. Vom Druckluftanschluss 11 führt eine Kreuzbohrung bis zum Querkanal 12 der die Kreuzbohrung 13 und die Düse 52 mit Druckluft versorgt. Durch die so erfolgte Aufteilung der zugeführten Druckluft kann über eine variable Einstellung des wirksamen Querschnitts der Düse 52 der Luftdruck im Druckluftversorgungssystem eingestellt werden.

Über die im Gehäuse angeordnete Kreuzbohrung 13 die an ihrer Öffnung mit einer Senkung 14 versehen ist strömt nun Druckluft in einen rundumlaufenden Einstich 15 der im Deckel 3 so angeordnet ist, dass die aus der Kreuzbohrung 13 einströmende Druckluft in den einen Ringkanal bildenden Einstich 15 einströmt und sich gleichmässig rund um den Deckel verteilt.

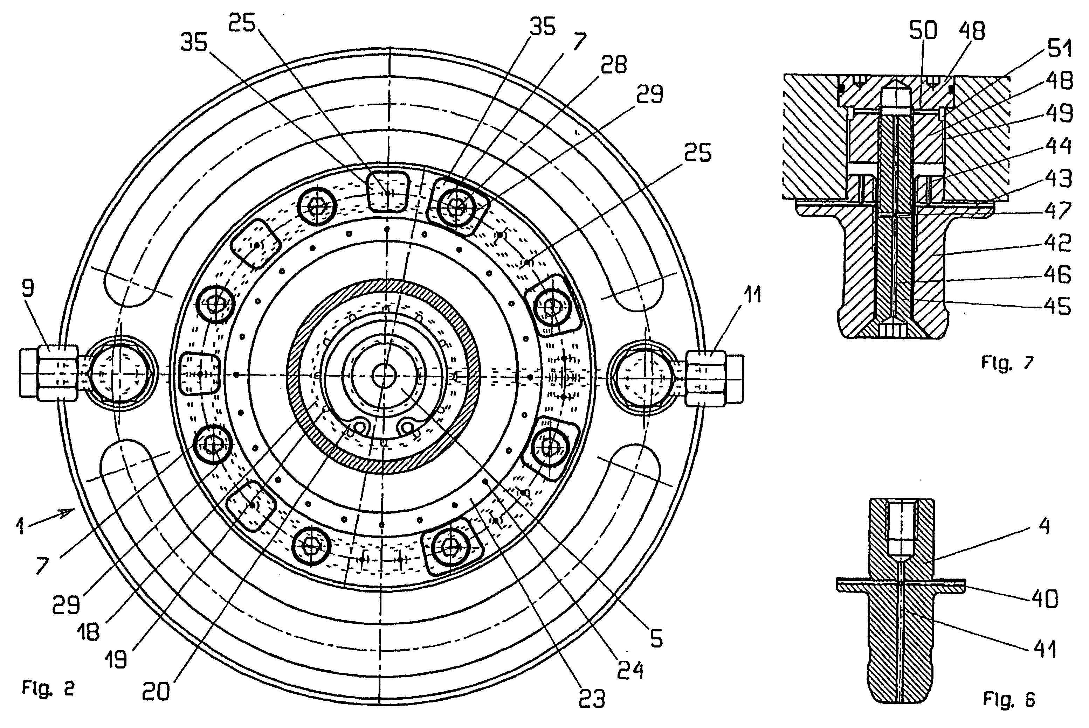

In Figur 2 ist dieser Einstich 15, der den Ringkanal bildet, in strichlierter Ausführung kreisförmig dargestellt. Rund um den Deckel oberhalb dieses Einstichs 15 verlaufend sind nun Kreuzbohrungen 16 angeordnet, die in einen weiteren Querkanal 17 münden. Dieser Querkanal 17 endet in einem Einstich 18 der in der Bohrung 36 für den Nippel hinter der Aufnahme für den Segerring 20 angeordnet ist, und rundum in der Bohrung 36 verläuft. Eine detaillierte Darstellung ist in der Figur 1.1 erkennbar.

Die Figur 1.1 zeigt den Deckel 3 in dem der Querkanal 17 angeordnet ist und bis in den Einstich 18 hineinreicht. Der Einstich 18 ist hinter einem Einstich für den Segerring 20 jedoch mit kleinerem Abmass radial nach aussen gerichtet angeordnet. In den Einstich 18 münden Ausblasbohrungen 19 die in der Bohrung 36 von oben schräg nach unten führen. Diese Ausblasbohrungen 19 sind rund um die Bohrung 36 verlaufend angeordnet und werden über den Einstich 18 der ebenfalls rund um die Bohrung 36 verläuft mit Druckluft versorgt. Solange nun der Einziehnippel 4 im verspannten Zustand des Schnellspannzylinder verharrt, sind diese Ausblasbohrungen 19 nach aussen hin verschlossen. Sobald der Einziehnippel 4 entriegelt wird, also durch den Kolben 5 nach oben geschoben wird, werden die Ausblasbohrungen 19 freigelegt und die darin befindliche Druckluft kann nach aussen strömen und ihre Reinigungsfunktion einleiten.

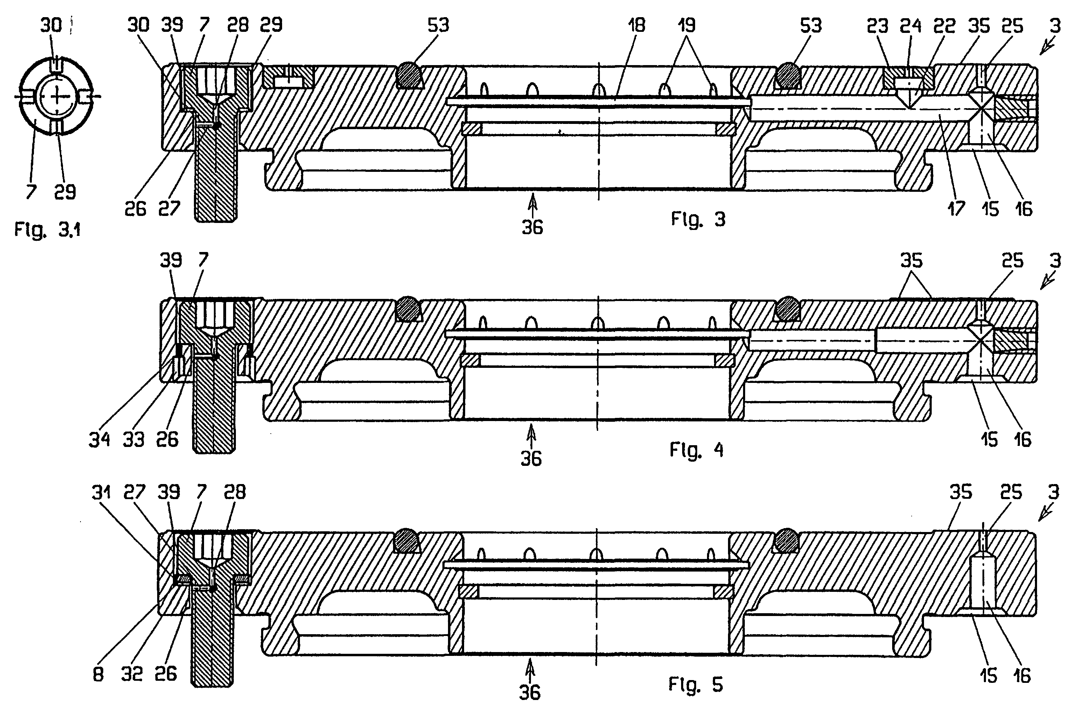

In Figur 1 ist in der linken Hälfte der Abbildung die Befestigungsschraube 7 dargestellt, die genau durch den Einstich 15 hindurch verläuft. Durch die Anordnung der Bohrung durch den Einstich 15 hindurch wird eine Druckluftversorgung in dem Bereich der Bohrung für die Befestigungsschraube 7 erreicht. Die Befestigungsschraube 7 ist so konstruiert, dass sie zusätzlich zur Befestigung des Deckels am Gehäuse eine Ausblasfunktion übernimmt. Detaillierte Angaben zu dieser Funktion sind in den Figuren 3, 4, 5 und den dazugehörigen vergrösserten Darstellungen zu entnehmen.

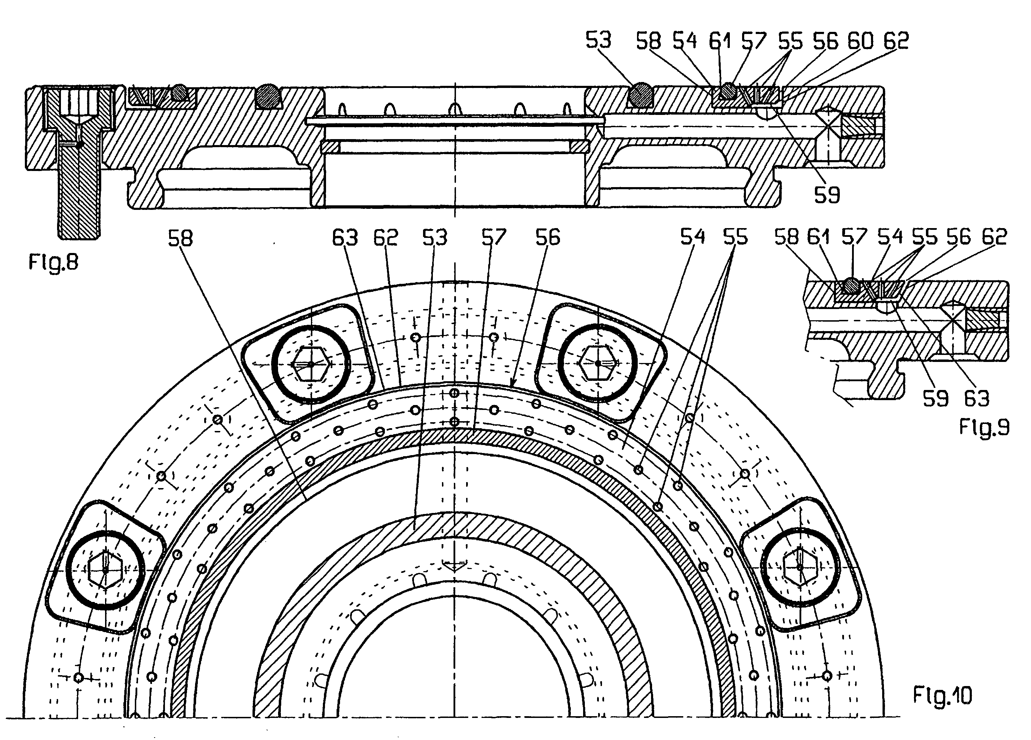

In Figur 1 ist eine Düse 52 dargestellt, die den Einziehnippel 4, 42 mit dem Druckluftsystem verbindet. Der Einziehnippel 4 ist mit einer Längsbohrung 41 und wenigstens einer Querbohrung 40 ausgestattet, wie auch in Figur 6 dargestellt. Im verriegelten Zustand sind diese Bohrungen mit Druckluft versorgt, die jedoch nicht entströmen kann, da die Längsbohrung 41 durch die Befestigungsschraube 38 verschlossen ist, und die Querbohrungen 40 durch die Wandung der Bohrung 36 für den Nippel ebenfalls verschlossen sind. Beim Entspannen des Schnellspannzylinders wird der Einzugsnippel nach oben bewegt, und die Öffnungen der Querbohrungen 40 werden freigelegt. Dadurch kann die Druckluft aus den Querbohrungen 40 entströmen und der im Luftdrucksystem befindliche Luftdruck senkt sich schlagartig ab.

Durch diese Funktion wird zum einen ein Ausblasen des betroffenen Bereiches erreicht, und zum anderen eine sicherheitstechnische Funktion erreicht, die ein geschossartiges Abheben der Palette vom Schnellspannzylinder verhindert. Diese geschossartige Abhebebewegung ergibt sich bei kleinen Paletten oder aber wenn keine Palette auf dem Einziehnippel befestigt ist und dieser nur lose im Schnellspannzylinder eingelegt ist, und die Druckluftversorgung eingeschaltet wird.

Anhand des wirksamen Querschnittes der von der Innenseite des Zylinders mit Luft beströmten Oberfläche des Einziehnippels 4 ergibt sich eine Kraftkomponente in Richtung nach aussen vom Schnellspannzylinder 1. Durch eine schlagartige Erhöhung des Luftdrucks im Druckluftversorgungssystems wird über die wirksame Fläche des Einziehzylinders eine enorme Beschleunigungswirkung auf den Einziehnippel 4 ausgeübt. Die Bewegungsgeschwindigkeit des Einziehnippels nach aussen hin ergibt sich durch die Beschleunigung mal die Zeit, während derer die beschleunigende Kraft auf den Einziehnippel wirkt.

Durch die Anbringung der Querbohrungen 40 wird die zeitliche Komponente, während derer der Einziehnippel 4 diese enorme Beschleunigung erfährt, auf ein Minimum eingeschränkt. Sobald die Querbohrungen 40 freiliegen, wird der Luftdruck im Druckluftsystem schlagartig reduziert. Dadurch reduziert sich auch schlagartig die Beschleunigung des Einziehnippels und die Ausfahrgeschwindigkeit des Einziehnippels wird dadurch nicht mehr erhöht, sondern im Gegenteil dazu wirkt die Schwerkraft des Nippels oder des Nippels mit einer Palette als Gegenkomponente, die die Ausfahrgeschwindigkeit des Einziehnippels wieder reduziert.

Der Einziehnippel in Figur 7 ist zwar anders aufgebaut, hat jedoch im Grunde dieselbe Funktionsweise. Er besteht aus dem Nippel 42, einem zylindrischen Bundanschlag 48 und einer Befestigungsschraube 45. In der Befestigungsschraube 45 befindet sich eine Längsbohrung 46 und eine Querbohrung 47, die in Zusammenwirkung mit einer Längsnut 49, einer Querbohrung 50 und einem Einstich 51 die bereits zuvor beschriebenen Wirkungsweise hinsichtlich der Ausblasung und der sicherheitstechnischen Funktion bewirken.

Figur 2 zeigt eine Draufsicht auf den erfindungsgemässen Schnellspannzylinder mit verschiedenen Ausführungsformen von Ausblasbohrungen. Im rechten Halbschnitt der Darstellung sind Inseln dargestellt, die Bohrungen zur Aufnahme von Befestigungsschrauben 7 beinhalten. Ebenfalls sind Ausblasbohrungen 25 dargestellt, die in den bereits beschriebenen Ringkanal, der als Einstich 15 ausgeführt ist, münden. In der linken Darstellungshälfte sind Inseln 35 dargestellt, in die ebenfalls eine Ausblasbohrung 25 mündet, die mit dem Einstich 15 in Verbindung steht.

Ein weiteres Merkmal der vorliegenden Erfindung zeigt eine Ausführungsform einer Insel, die einen nur etwas grösseren Aussendurchmesser als der Schraubenkopf der Befestigungsschraube 7 darstellt. Zwischen dem Kopf der Befestigungsschraube 7 und der rund ausgeführten Insel 35 strömt über eine Längsnut 29 Druckluft aus dem Einstich 15 hervor. Diese Ausführungsform unterscheidet sich von der Ausführungsform mit den segmentförmigen Inseln nur durch die Grösse der Auflagefläche, die durch die Oberfläche der Inseln gegeben ist. Radial von diesen Inseln nach innen gesehen ist der Ausblasring 23 dargestellt, der die Ausblasbohrungen 24 beinhaltet. Dieser Ausblasring 23 ist durch Kreuzbohrungen 22, Querbohrungen 17 und einer weiteren Kreuzbohrung 16 an dem Druckluftversorgungssystem angeschlossen. Diese Ausführungsform der vorliegenden Erfindung kann wahlweise zusätzlich zu den Inseln und den darin angeordneten Ausblasbohrungen zur Unterstützung der Ausblaseinrichtung angeordnet werden. Ein Vorteil der Anordnung dieses Ausblasringes 23 besteht darin, dass die ausströmende Druckluft noch gezielter verteilt werden kann, und dadurch ein noch besserer Reinigungseffekt hervorgerufen wird. Die Anordnung der zuvor beschriebenen Inseln 35, sowie der Ausblasbohrungen 24 und 25, sowie der Längsbohrung 28 in der Befestigungsschraube 7 kann wahlweise symmetrisch oder auch unsymmetrisch oberhalb des ringförmigen Versorgungskanals, der durch den Einstich 15 gebildet wird, angeordnet sein.

Eine zusätzliche Ausblaseinrichtung ist radial weiter nach innen gesehen an der Wandung der Bohrung 36 für den Befestigungsnippel angeordnet. Es handelt sich dabei um die Ausblasbohrungen 19 die vom Einstich 18 mit Druckluft versorgt werden. Dieser Einstich 18 ist, wie bereits beschrieben, in der Bohrung 36 rundumlaufend angeordnet, und liegt hinter dem Einstich für den Segerring 20. Die Position und die Abmasse des Einstichs sind so angeordnet, dass der Segerring den Einstich 18 zur Bohrung 36 hin abdichtet. Die einzigen Öffnungen in Richtung der Bohrung 36 sind die Ausblasbohrungen 19, die schräg nach oben und zur axialen Mitte hin ausgerichtet sind. Solange der Einziehnippel 4 im verspannten Zustand beharrt, sind diese Ausblasbohrungen verschlossen und die anstehende Druckluft kann daraus nicht entweichen. Sobald der Einziehnippel 4 entspannt wird, wird dieser angehoben und die Ausblasbohrungen 19 werden freigelegt, so dass die Druckluft aus diesen Ausblasbohrungen 19 entströmen und ihre reinigende Funktion übernehmen kann.

In Figur 3 ist eine Schnittdarstellung eines Deckels des Schnellspannzylinders dargestellt. In der rechten Hälfte der Darstellung schliesst an den ringsumlaufenden Einstich 15 die Kreuzbohrung 16 an, in die die Ausblasbohrung 25 mündet. Diese Ausblasbohrung 25 entspricht einer Insel-Darstellung in Figur 2 in der eine Insel 35 gezeigt wird, die ungefähr in ihrer Mitte die Ausblasbohrung 25 aufweist. Radial nach innen gerichtet geht von der Kreuzbohrung 16 ein Querbohrung 17 ab, von der eine weitere Kreuzbohrung 22 die Druckluftversorgung für den Ausblasring 23 bewirkt. Die Mündung der Querbohrung 17 in Richtung zur Bohrung 36 die für den Einzugsnippel vorgesehen ist, endet im ringsumlaufenden Einstich 18, der die Ausblasbohrungen 19 mit Druckluft versorgt. Im rechten oberen Bildbereich der Darstellung ist die Erhebung der Insel gegenüber der restlichen Oberfläche des Deckels des Schnellspannzylinders erkennbar. Für Abdichtzwecke ist der O-Ring 53 um die Bohrung 36 herum angeordnet.

Die linke Hälfte der Darstellung in Figur 3 zeigt ebenfalls den ringsumlaufenden Ausblasring 23, sowie die Befestigungsschraube 7 in der dafür vorgesehenen Bohrung. Die Befestigungsschraube 7 steckt in der Bohrung die senkrecht durch den Einstich 15 hindurchgeht und übernimmt einerseits die Funktion der Befestigung des Deckels gegenüber dem Gehäuse, und andererseits durch eine spezielle Ausführungsform der Befestigungsschraube 7 eine Ausblasfunktion.

Die Befestigungsschraube 7 weist, wie in Figur 3.1 dargestellt, Längsnuten 29 und Quernuten 30 auf. Die für die Aufnahme der Befestigungsschraube 7 vorgesehene Bohrung ist entsprechend mit grösserem Durchmesser ausgeführt, so dass Druckluft aus dem Einstich 15 entlang des Gewindes und des ausgebildeten Durchlasses 26 der sich zwischen Schraube und Bohrung ausbildet nach oben strömen kann. In diesen Kanal 26 mündet einerseits die Querbohrung 27 die mit der Längsbohrung 28 in der Befestigungsschraube 7 angeordnet sind, und andererseits besteht eine Verbindung zwischen dem Durchlass 26 und den Quemuten 29 und Längsnuten 30, so dass die durchströmende Druckluft sowohl aus der Mitte der Befestigungsschraube wie auch um den Rand des Kopfes der Befestigungsschraube ausströmen kann. Die Figur 3.1 zeigt eine Ansicht der Befestigungsschraube von der Gewindeseite her gesehen.

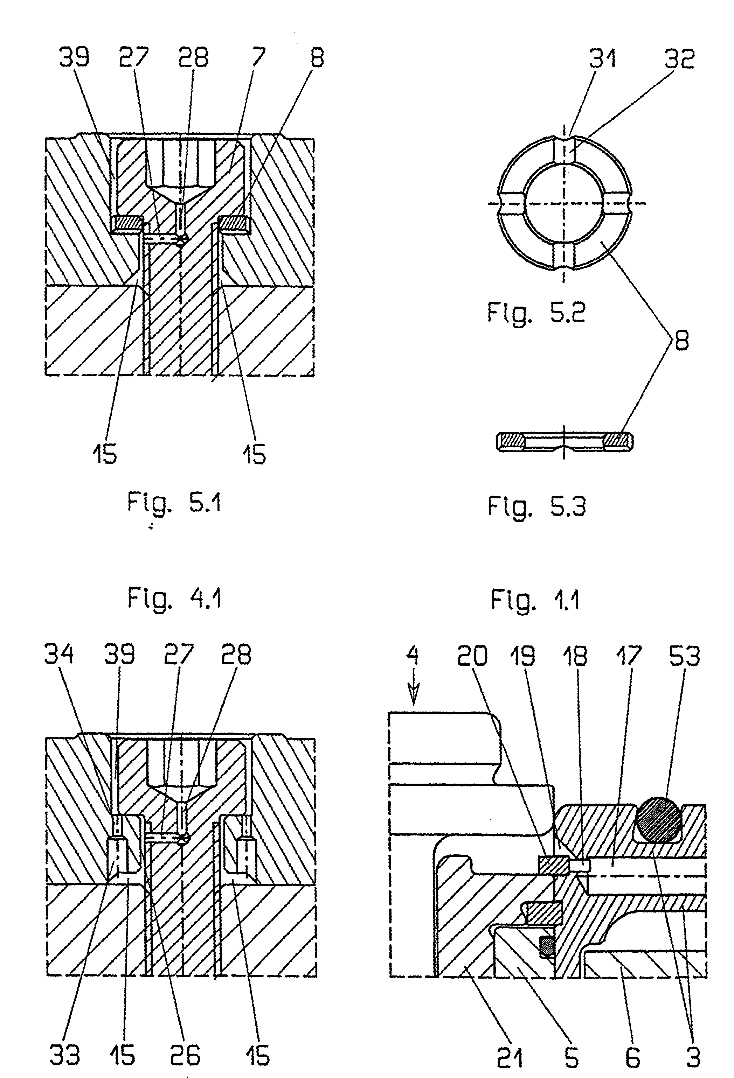

Die Figur 4 zeigt wiederum einen Querschnitt eines Deckels für einen Schnellspannzylinder, der in seiner rechten Hälfte in dieser Ausführungsform keinen Ausblasring 23 aufweist, sondern die Ausführungsform mit der Befestigungsinsel zeigt, und die Ausblasbohrung 25 die ausserhalb einer Befestigungsinsel liegt. Die Befestigungsinsel 35 liegt in dieser Darstellung also hinter der Ausblasbohrung 25. In der linken Hälfte der Darstellung ist wiederum die Befestigung mit der Befestigungsschraube 7 erkennbar, bei der in einer weiteren Ausführungsform zusätzliche Kreuzbohrungen 33 und 34 im Deckel 3 angeordnet sind. Durch diese Kreuzbohrungen kann nun Druckluft entströmen, die wiederum in einem Durchlas 39, der sich zwischen dem Kopf der Befestigungsschraube und der Bohrung ausbildet, mündet und so aus dem Deckel des Schnellspannzylinders ausströmt. Bei dieser Ausführungsform können sowohl gewöhnliche Schrauben als auch Schrauben, wie bereits in der zuvor beschriebenen Ausführungsform mit den Quemuten 20 und den Längsnuten 29 ausgestattet sind verwendet werden.

Die Figur 5 zeigt wiederum eine Schnittdarstellung eines Deckels für einen Schnellspannzylinder in einer weiteren Ausführungsform. In der rechten Hälfte der Darstellung ist der Einstich 15 erkennbar, in den die Kreuzbohrung 16 mündet, die die Ausblasbohrung 25 mit Druckluft versorgt. Bei dieser Ausführungsform ist keine Querbohrung 17 angeordnet. D. h. diese Ausführungsform zeigt lediglich den Querschnitt einer Ausblasbohrung 25 mit dem Anschluss an das Druckluftversorgungssystem.

In der linken Hälfte dieser Darstellung ist wiederum die Befestigung des Deckels 2 am Gehäuse dargestellt, die über die Befestigungsschraube 7 mit einer zusätzlichen Zentrierscheibe 8 erfolgt. Die Funktionsweise dieser Befestigungsart ist ähnlich wie die Funktionsweise mit der speziellen Befestigungsschraube 7 aus Figur 3. Bei dieser Ausführungsform wird jedoch eine speziell gefertigte Zentrierscheibe 8 verwendet. Diese Zentrierscheibe weist ebenfalls Längsnuten 31 und Quernuten 32 auf. Die Funktionsweise dieser Nuten entspricht der Funktionsweise der Nuten aus der Figur 3.1. Die Befestigungsschraube 7 weist ebenfalls eine Querbohrung 27 und eine Längsbohrung 28 auf, so dass die bereits oben beschriebenen Funktion der Ausblasung aus der Schraubenmitte erfolgt. Die Zufuhr der Druckluft erfolgt auch hier über den Einstich 15 und den Durchlass 16. Die Figur 5.2 zeigt eine Unteransicht der Zentrierscheibe 8 und die Figur 5.3 zeigt eine Schnittdarstellung der Zentrierscheibe 8.

Die Figur 4.1 zeigt eine vergrösserte Darstellung der Befestigung des Deckels 3 auf dem Gehäuse 2 mit der Befestigungsschraube 7. Bei der Befestigungsschraube 7 sind die Längsbohrung 28 und die Querbohrung 27 dargestellt. Im Deckel 3 ist der Durchlass 26 und der Einstich 15 dargestellt. Die in Deckel 3 angeordnete Kreuzbohrung 33 dient zur Druckluftzufuhr über die Kreuzbohrung 34 in den Durchlass 39 der sich zwischen Deckel 3 und dem Kopf der Befestigungsschraube 7 ausbildet. Durch diese Anordnung umspült die Druckluft den Kopf der Befestigungsschraube 7 und tritt nach Freigabe des Einzugsnippels und der damit verbundenen Abhebung der Palette sowohl aus der Schraubenkopfmitte als auch um den Schraubenkopf herum aus. Dadurch entsteht der Reinigungseffekt, den die ausströmende Druckluft erzeugt.

In der Figur 5.1 ist ein vergrösserter Ausschnitt aus der Figur 5 dargestellt. Die Funktionsweise der Entlüftungseinrichtung ist bereits in der Figurenbeschreibung für die Figur 5 ausführlich erklärt.

Die Ausführungsformen in den dargestellten Figuren ist nicht beschränkend sondern kann durchaus in verschiedenen Kombinationen oder auch mit weiteren Ergänzungen Anwendung finden.

Die Darstellung nach Figur 8 zeigt eine weitere Ausführungsform der vorliegenden Erfindung, bei der ein Ausblasring 54 im Deckel des Schnellspannzylinders 1 angeordnet ist. Dieser Ausblasring 54 ist anstelle des in Figur 3 beschriebenen Ausblasringes 23 vorgesehen. Gegenüber dem Ausblasring 23 unterscheidet sich der Ausblasring 54 darin, daß er an seiner radialen Innenseite durch eine Passung 58 in dem im Deckel dafür vorgesehenen Einstich fixiert ist und auf seiner radialen Außenkontur einen definierten geringen Abstand gegenüber der Wandung im Einstich des Deckels aufweist und somit eine Ausblasnut 56 ausbildet. Zusätzlich sind im Ausblasring 54 Ausblasbohrungen 55 angeordnet, die über das bisher bereits beschriebene Zuführungssystem mit Luft, oder bei Bedarf auch mit entsprechender Flüssigkeit, versorgt werden können. Dazu ist es vorgesehen, daß der Ausblasring 54 an der dem Deckelinneren zugewandten Seite radial auswärts gerichtet einen Einstich 59 aufweist, der die Höhe des Ausblasringes 54 dahingehend reduziert, daß ein rundumlaufender Versorgungskanal entsteht, welcher sich zwischen dem Boden des Einstichs im Deckel, in welchem der Ausblasring 54 angeordnet wird und dem Bereich des Ausblasrings 54, welcher sich zum Deckel hin ausgerichtet befindet und radial auswärts gerichtet ist, erstreckt. Dadurch ergibt sich ein rundum laufender - in etwa einen rechteckigen Querschnitt aufweisender - Kanal, der für die Versorgung der beigebrachten Druckluft oder komprimierten Flüssigkeit zur Verfügung steht, wodurch diese an die einzelnen Ausblasbohrungen 55 verteilt werden. Die Ausblasbohrungen 55 sind dabei in drei zentrischen Ringanordnungen ausgeführt, wobei sich bei einer Betrachtung von oben auf den Deckel die Ausblasbohrungen 55 des mittleren Ringes in etwa senkrecht zur Deckelebene des Schnellspannzylinders ausgerichtet sind, die Ausblasbohrungen 55 des Inneren der drei Ringe so angeordnet sind, daß sich das ausströmende Medium von der vertikalen Achse weg nach innen hin austritt und daß die Ausblasbohrungen 55 des Äußeren der drei Ringe so angeordnet sind, daß sie sich von der vertikalen Achse nach außen hin geneigt ausbilden, wodurch das ausströmende Medium nach außen hin wegfließt. Dadurch wird ein rundum reinigender Effekt bei Beaufschlagung des Mediums auf das entsprechende System erzielt. Als zusätzlicher Reinigungseffekt wirkt das Austreten des entsprechenden Mediums aus der Ausblasnut 56, welches sich zwischen der radialen Außenkontur 62 des Ausblasringes 54 und der radialen Außenkontur des Einstichs für den Ausblasring 54 erstreckt. Diese Ausblasnut 56 ist durch einen entsprechenden Spalt ausgebildet, der sich zwischen der radialen Außenkontur 62 des Ausblasrings 54 und der radialen Außenkontur des Einstichs für den Ausblasring 54 erstreckt. Zusätzlich ist noch ein weiterer Einstich 61 an der Oberseite des Ausblasrings 54 angeordnet, in welchem ein weiterer O-Ring 57 zu Abdichtzwecken angeordnet ist. Dieser O-Ring 57 verhindert zusätzlich das Eindringen des beaufschlagten Mediums in den Innenbereich des Schnellspannzylinders.

In der Darstellung nach Figur 9 ist der Ausblasring 54 in einer gegenüber der Figur 8 abgeänderten Ausführungsform gezeigt. Es handelt sich dabei im Grunde um denselben Ausblasring, bei dem jedoch zusätzlich die radiale Außenkontur 62 vom Einstich 59 her beginnend zur im Einbauzustand gesehenen Außenseite hin schräg nach außen ausgeformt ist. Dadurch ergibt sich bereits ein Anströmwinkel für das austretende Medium, welcher radial nach außen hin gerichtet ist. Zusätzlich ist die radiale Außenkontur des Einstichs 63 für den Ausblasring 54 mit einer entsprechenden, gegenüber der lotrechten, winklig ausgerichteten Fläche ausgebildet, so daß sich ein etwa paralleler Abstand zwischen der radialen Außenkontur 62 des Ausblasrings 54 und der radialen Außenkontur des Einstichs 63 für den Ausblasring 54 ergibt, wodurch sich ein rundum laufender Kanal ausbildet, welcher im Deckel von innen nach außen hin radial schräg auswärts verlaufend angeordnet ist. Dadurch ergibt sich ein Führungseffekt für das austretende Medium, welches durch das Versorgungssystem zugeführt wird, bei dem es sich - wie bereits darauf hingewiesen - entweder um Luft oder um eine entsprechende Flüssigkeit handelt. Die Befestigung dieses Ausblasrings 54 entspricht der Ausführungsform in der Figur 8. Auch der Einstich 59 ist entsprechend der Ausführungsform in Figur 8 realisiert, so daß sich der wesentliche Unterschied zwischen den beiden Ausführungsformen in Figur 8 und 9 darin ergibt, daß die radiale Aussenkontur 62 des Ausblasrings 54 und die radiale Aussenkontur 63 des Einstichs für den Ausblasring 54 gegenüber der Vertikalen in einem Winkel, welcher sich schräg nach außen erstreckt, der Ausführungsform nach Figur 9 ausgeführt ist und bei der Ausführungsform nach Figur 8 etwa in der Lotrechten ausgeführt ist. Bei der Ausführungsform nach Figur 8 tritt also das ausströmende Medium in etwa lotrecht von der Oberfläche des Schnellspannzylinders aus. Der Neigungswinkel gegenüber der Lotrechten für die radialen Außenkonturen 62 und 63 kann dabei je nach Anwendungsfall unterschiedlich ausgeführt sein.

In Figur 10 ist ein Abschnitt einer Draufsicht auf die Ausführungsform nach den Figuren 8 und 9 dargestellt. Es handelt sich dabei also um die Draufsicht auf einen Deckel eines Schnellspannzylinders, in dem ein Ausblasring 54 angeordnet ist. Dieser Ausblasring 54 weist drei Bereiche auf, in denen Ausblasbohrungen 55 radial angeordnet sind. Die detaillierten Angaben zu diesen Ausblasbohrungen wurden bereits in der Beschreibung zu den Figuren 8 und 9 ausführlich dargelegt. An der radial inneren Seite des Ausblasrings 54 ist die Passung 58 gegenüber der radial inneren Wandung des Einstichs im Deckel für den Ausblasring 54 realisiert. Mittels dieser Passung 58 ist der Ausblasring 54 am Deckel des Schnellspannzylinders befestigt. Radial nach außen hin gesehen ist die Ausblasnut 56 zwischen der radialen Außenkontur 62 des Ausblasrings 54 und der radialen Außenkontur 63 des Einstichs für den Ausblasring 54 ausgebildet. Selbstverständlich ist es auch möglich die Passung 58 zwischen der radial äußeren Seite des Ausblasringes 54 und der radial äußeren Wandung des Einstiches für den Ausblasring 54 zu realisiernen, wobei die Ausblasnut 56 dann zwischen der radial inneren Seite des Ausblasringes 54 und der radial inneren Wandung des Einstiches für den Ausblasringes ausgebildet ist.

Bei der Draufsicht ist es dabei nicht erkennbar, ob es sich um die Ausführungsform nach Figur 8 oder um die Ausführungsform nach Figur 9 handelt. Diese Informationen sind aus den Darstellungen 8 und 9 zu entnehmen, da in diesen Darstellungen die Schnittzeichnung wiedergegeben ist, aufgrund deren die Verläufe der radialen Außenkonturen 62 und 63 erkennbar sind. Dabei ist auch erkennbar, daß an der Außenkante des Einstichs 59 eine Anphasung 60 ausgeführt ist, die auch eine Führungsfunktion für das austretende Medium übernimmt. In der Ausführungsform nach Figur 9 kann eine solche Anphasung 60 ebenfalls vorgesehen sein. Sie ist jedoch nicht zwingend notwendig.

### Zeichnungslegende

- 1.: Schnellspannzylinder
- 2.: Gehäuse
- 3.: Deckel
- 4.: Einziehnippel
- 5.: Kolben
- 6.: Spannfeder
- 7.: Befestigungsschraube
- 8.: Zentrierscheibe
- 9.: Ölanschluß
- 10.: Ölzuführbohrung
- 11.: Druckluftanschluss
- 12.: Querkanal
- 13.: Kreuzbohrung
- 14.: Senkung
- 15.: Einstich
- 16.: Kreuzbohrung
- 17.: Querkanal
- 18.: Einstich
- 19.: Ausblasbohrung
- 20.: Segerring
- 21.: Kolbendichtung
- 22.: Kreuzbohrung
- 23.: Ausblasring
- 24.: Ausblasbohrung
- 25.: Ausblasbohrung
- 26.: Durchlaß
- 27.: Querbohrung
- 28.: Längsbohrung
- 29.: Längsnut
- 30.: Quernut
- 31.: Längsnut
- 32.: Quernut
- 33.: Kreuzbohrung
- 34.: Kreuzbohrung
- 35.: Insel
- 36.: Bohrung f Nippel
- 37.: Palette
- 38.: Befestigungsschraube
- 39.: Durchlaß
- 40.: Querbohrung
- 41.: Längsbohrung
- 42.: Nippel
- 43.: Querbohrung
- 44.: Längsbohrung
- 45.: Befestigungsschraube
- 46.: Längsbohrung
- 47.: Querbohrung
- 48.: Bundanschlag
- 49.: Längsnut
- 50.: Querbohrung
- 51.: Einstich
- 52.: Düse
- 53.: O-Ring
- 54.: Ausblasring
- 55.: Ausblasbohrungen
- 56.: Ausblasnut
- 57.: O-Ring
- 58.: Passung
- 59.: Einstich
- 60.: Anphasung
- 61.: Einstich
- 62.: radiale Außenkontur (54)
- 63.: Einstich

## Patentansprüche

1. Verfahren zum Ausblasen und Ausspritzen von Verunreinigungen von der Oberfläche eines Schnellspannzylinders (1) und den darauf angeordneten Funktionseinheiten, wobei der Schnellspannzylinder (1) im wesentlichen aus einem Gehäuse (2) einem Deckel (3), Befestigungsschrauben (7), einem Kolben (5), Spannfedern (6) und einem Einziehnippel (4) zum Festspannen einer Palette (37) besteht, **dadurch gekennzeichnet, daß** ein mit Druckluft versorgtes Druckluftversorgungssystem die gezielte Verteilung von Druckluft aus Öffnungen (19, 24, 25, 39, 40, 43) des Schnellspannzylinders (1) innerhalb des Schnellspannzylinders (1) für Reinigungszwecke, zum Schutz vor Verunreinigungen beim Werkzeug- und Werkstückwechsel, sowie sicherheitstechnische Funktionen beim Entspannen des Schnellspannzylinders (1) übernimmt.

2. Verfahren nach Anspruch 1, **dadurch gekennzeichnet, dass** das Druckluftversorgungssystem die zugeführte Druckluft in mehrere Versorgungseinheiten aufteilt.

3. Verfahren nach einem der beiden Ansprüche 1 und 2, **dadurch gekennzeichnet, dass** die zugeführte Druckluft sowohl aus Ausblasbohrungen (19, 24, 25), Durchlässen (39), wie auch aus Querbohrungen (40, 43) gezielt entströmt und dadurch die Oberfläche des Schnellspannzylinders sowie auch die Auflagefläche der aufgespannten Palette von Verunreinigungen befreit.

4. Verfahren nach einem der vorhergehenden Ansprüche, **dadurch gekennzeichnet, dass** durch die Öffnungen jener Auslassbohrungen (24 und 25), die in einer tieferen Ebene als die Auflagefläche der Inseln (35) gegenüber der Auflagefläche der Palette liegen, auch bei aufgespannter Palette Druckluft entweicht, und somit bereits einen vorreinigenden Effekt durch das Ausblasen von Druckluft vor dem Entspannen des Spannzylinders bewirken.

5. Verfahren nach einem der Ansprüche 1 bis 3, **dadurch gekennzeichnet, dass** aus Auslassbohrungen (25) und Durchlässen (26) Druckluft entströmt, sobald die Palette vom Spannzylinder abgehoben wird, wobei die höchste Fliessgeschwindigkeit der Druckluft im Augenblick des Abhebens der Palette durch den minimalen Abstand zwischen Palette und Auflagefläche des Schnellspannzylinders erreicht wird und dadurch die grösstmögliche Reinigungswirkung in diesem Augenblick erfolgt, der sich auch beim Festspannen der Palette in umgekehrter Reihenfolge wiederholt, und dabei evtl. festgeklebte Verunreinigungen oder Bohrspäne sowohl von der Palette als auch vom Schnellspannzylinder wegbläst.

6. Verfahren nach einem der Ansprüche 1 bis 3, **dadurch gekennzeichnet, dass** der Einziehnippel (4, 42, 48) beim Entspannen des Schnellspannzylinders Druckluft durch seine Längsbohrung (41, 46) und seine Querbohrung (40, 43) schlagartig abbläst, und dadurch einen Ausblaseffekt für den Schnellspannzylinder und die darauf aufgespannte Palette erzeugt.

7. Verfahren nach einem der Ansprüche 1 bis 3 und 7, **dadurch gekennzeichnet, dass** durch das schlagartige Austreten der Druckluft aus der Querbohrung (40, 43) des Einziehnippels (4) eine schlagartige Druckreduzierung der Druckluft erfolgt, wodurch die Ausfahrbeschleunigung des Einziehnippels beim Entspannen des Schnellspannzylinders abrupt beendet wird, und infolge dessen sich die Ausfahrgeschwindigkeit des Einziehnippels nicht mehr weiter erhöht, wodurch der Einziehnippel auch im unbelasteten Zustand keine geschossartige Ausfahrbewegung durchführen kann.

8. Vorrichtung zum Ausblasen und Ausspritzen von Verunreinigungen von der Oberfläche eines Schnellspannzylinders und den darauf angeordneten Funktionseinheiten, wobei der Schnellspannzylinder im Wesentlichen aus einem Gehäuse, einem Deckel, Befestigungsschrauben, einem Kolben, Spannfedern und einem Einziehnippel, zum Festspannen einer Palette besteht, **dadurch gekennzeichnet, dass** der Schnellspannzylinder (1) ein Druckluftversorgungssystem aufweist, das aus Druckluftanschluss (11), Querbohrungen (12, 17, 27, 40 und 43), Kreuzbohrungen (13, 22), Einstichen (15, 18), Längsbohrungen (28, 46), sowie Auslassbohrungen (18, 24, 25), und Durchlässen (26, 39) besteht.

9. Vorrichtung nach Anspruch 8, **dadurch gekennzeichnet, dass** der Einstich (15) im Deckel (3) ungefähr kreisförmig rundumlaufend an seiner unteren auf dem Gehäuse aufliegenden Fläche angeordnet ist.

10. Nach einem der Ansprüche 8 und 9, **dadurch gekennzeichnet, dass** vom Einstich (15) ausgehend mindestens eine Kreuzbohrung (16) in axialer Richtung im Deckel (2) verläuft, in die mindestens eine Querbohrung (17) radial von aussen nach innen bis zu einem Einstich (18) reicht, der ebenfalls im Zylinderdeckel (2) in der Bohrung (36) radial auswärtsgerichtet hinter einem Einstich für den Segerring (20) angeordnet ist, von dem ausgehend schräg zentral nach oben gerichtet Auslassbohrungen in die Bohrung (36) hineinreichen.

11. Vorrichtung nach Anspruch 10, **dadurch gekennzeichnet, dass** die Ausblasbohrungen (19) rundumlaufend, etwa symmetrisch in entsprechender Anzahl angeordnet unterhalb der Oberkante der Bohrung (36) münden.

12. Vorrichtung nach einem der Ansprüche 8 und 9, **dadurch gekennzeichnet, dass** die Bohrung für die Aufnahme der Befestigungsschraube (7) im Deckel (3) senkrecht durch den rundumlaufenden, einen Ringkanal bildenden, Einstich (15) hindurchgehen, und in entsprechender Anzahl über die Oberfläche des Deckels des Schnellspannzylinders verteilt sind.

13. Nach einem der Ansprüche 8, 9 und 12, **dadurch gekennzeichnet, dass** die Befestigungsschrauben (7) durchgängig verbundene Querbohrungen (27) und Längsbohrung (28) aufweisen, wobei die Querbohrung (27) im Durchlass (26) mündet, der mit dem Einstich (15) durchgängig verbunden ist, und die Längsbohrung (28) in der Mitte des Schraubenkopfes der Befestigungsschraube (7) ausmündet, und somit einen durchgängigen Kanal vom Einstich 15 bis an die Oberfläche des Schnellspannzylinders bilden.

14. Vorrichtung nach einem der Ansprüche 8, 9 und 13, **dadurch gekennzeichnet, dass** die Durchführungsbohrung zur Aufnahme der Befestigungsschraube (7) im Deckel (3) mit einem derartig grossen Durchmesser gefertigt ist, dass sich zwischen dem Kopf der Befestigungsschraube und der Wandung im Bohrloch ein Durchlass (39) ausbildet, und dass die Bohrung für die Aufnahme der Befestigungsschraube im Bereich des Gewindes entsprechend gross gefertigt ist, dass sich ein Durchlass (26) zwischen der Aussenwandung des Deckels (3) und dem Gewinde der Befestigungsschraube (7) ausbildet.

15. Nach einem der Ansprüche 8, 9, 14 und 15, **dadurch gekennzeichnet, dass** von der Unterseite des Deckels (3) Kreuzbohrungen (33 und 34) um den Umfang des Durchlasses (39) verteilt so angeordnet sind, dass die Kreuzbohrungen (33 und 34) im Durchlass (39) münden und damit einen durchgängigen Kanal zwischen dem Einstich (15) und der Oberfläche des Deckels des Schnellspannzylinders bilden.

16. Vorrichtung nach einem der Ansprüche 8, 9 und 12 bis 15, **dadurch gekennzeichnet, dass** die Befestigungsschraube (7) mit wenigstens einer Längsnut (29) und einer Quernut (30) versehen ist, die den Austritt der Druckluft aus dem Durchlass (26) an die Oberseite des Deckels des Schnellspannzylinders ermöglicht.

17. Vorrichtung nach einem der Ansprüche 8, 9 und 12 bis 1, **dadurch gekennzeichnet, dass** eine Zentrierscheibe (8) eine Befestigungsschraube (7) aufnimmt, wobei die Zentrierscheibe (8) mit wenigstens einer Längsnut (31) und wenigstens einer Quernut (32) versehen ist, durch diese die Druckluft aus dem Durchlass (26) in den Durchlass (39) einströmen und an die Oberfläche des Deckels des Zylinders ausströmen kann.

18. Vorrichtung nach einem der Ansprüche 8, 9 **dadurch gekennzeichnet, dass** eine Kreuzbohrung (22) von der Querbohrung (17) in einen Einstich, der zur Aufnahme eines Ausblasringes (23,54) vorgesehen ist mündet und die Druckluft durch die Ausblasbohrungen (24,55) die ungefähr ringförmig auf dem Ausblasring angeordnet sind, ausströmt.

19. Vorrichtung nach einem der vorhergehenden Ansprüche 8 bis 18, **dadurch gekennzeichnet, daß** ein Ausblasring (54) Ausblasbohrungen (55) aufweist, dessen Öffnungen ungefähr ringförmig an dessen Oberfläche angeordnet sind, wobei die Bohrungen teilweise vertikal zur Oberfläche des Ausblasrings (54) und teilweise nach innen und teilweise nach außen gegenüber der Vertikalen geneigt ausgebildet sind.

20. Vorrichtung nach einem der vorhergehenden Ansprüche 8 bis 19, **dadurch gekennzeichnet, daß** der Ausblasring (54) zwischen seiner radialen Außenkontur (62) und der radialen Außenkontur des Einstichs (63) für den Ausblasring (54) im Deckel des Schnellspannzylinders (1) eine Ausblasnut (56) ausbildet.

21. Vorrichtung nach einem der vorhergehenden Ansprüche 8 bis 20, **dadurch gekennzeichnet, daß** eine Ausblasnut (56) in etwa vertikal zur Oberfläche des Deckels des Schnellspannzylinders (1) ausgerichtet ist.

22. Vorrichtung nach einem der vorhergehenden Ansprüche 8 bis 21, **dadurch gekennzeichnet, daß** eine Ausblasnut (56) gegenüber der Vertikalen zur Oberfläche des Deckels des Schnellspannzylinders (1) auswärts geneigt ausgerichtet ist.

23. Vorrichtung nach einem der vorhergehenden Ansprüche 8 bis 22, **dadurch gekennzeichnet, daß** der Ausblasring (54) einen Einstich (59) aufweist, welcher sich an der dem Deckel des Schnellspannzylinders (1) zugewandten Seite im radial äußeren Bereich erstreckt.

24. Vorrichtung nach einem der vorhergehenden Ansprüche 8 bis 23, **dadurch gekennzeichnet, daß** der Ausblasring (54) an seiner Oberseite einen O-Ring (57) aufweist.

25. Vorrichtung nach einem der vorgehenden Ansprüche 8 bis 24, **dadurch gekennzeichnet, dass** im Boden des Kolbens im Bereich seiner Längsachse eine Düse (52) angeordnet ist, die die Längsbohrung (41) des Einziehnippels (4) mit Druckluft versorgt.

26. Vorrichtung nach einem der vorhergehenden Ansprüche 8 bis 25, **dadurch gekennzeichnet, dass** der Durchmesser der Bohrung in der Düse (52) die Druckverteilung des Luftdrucks im Druckluftversorgungssystem regelt.

## Claims

1. Method of blowing out and rinsing contaminations from the surface of a quick-action clamping cylinder (1) and the functional units disposed thereon, with said quick-action clamping cylinder (1) consisting essentially of a housing (2), a cover (3), fastening screws (7), a piston (5), tensioning springs (6) and a feeding nipple (4) for clamping a pallet (37), **characterised in that** a compressed-air supply system provided with compressed air realises the selective distribution of compressed air from openings (19, 24, 25, 39, 40, 43) of said quick-action clamping cylinder (1) within said quick-action clamping cylinder (1) for cleaning purposes, for protection from contamination during the change of tools and work pieces, as well as safety-related functions when said quick-action clamping cylinder (1) is released.

2. Method according to Claim 1, **characterised in that** said compressed-air supply system divides the supplied compressed air into a plurality of supply units.

3. Method according to either of the two Claims 1 and 2, **characterised in that** the supplied compressed air is selectively discharged not only from blow-out bores (19, 24, 25) and passages (39) but also from transverse bores (40, 43), thus relieving the surface of said quick-action clamping cylinder as well as the supporting surface of the clamped pallet from contaminations.

4. Method according to any of the preceding Claims, **characterised in that** compressed air is discharged through the orifices of those discharge bores (24 and 25) that are located in a plane lower than the supporting surface of the islets (35) opposite to the supporting surface of the pallet even when the pallet is clamped, thus creating already a preliminary cleaning effect by blowing out compressed air before said clamping cylinder is released.

5. Method according to any of the Claims 1 to 3, **characterised in that** compressed air is discharged from discharge bores (25) and passages (26) as soon as the pallet is lifted off said clamping cylinder, with the maximum flow rate of the compressed air being achieved in the moment by which the pallet is lifted off, due to the minimum spacing between the pallet and said supporting surface of said quick-action clamping cylinder and hence the maximum cleaning effect possible being achieved **in that** moment, which is repeated in the inverted sequence also when the pallet is clamped, with contaminations or boring or drilling chips possibly adhering thereto being blown off from both the pallet and said quick-action clamping cylinder.

6. Method according to any of the Claims 1 to 3, **characterised in that** when said quick-action clamping cylinder is released, said feed nipple (4, 42, 48) blows out compressed-air in a one blow through its longitudinal bore (41, 46) and its transverse bore (40, 43), thus creating a blow-out effect for said quick-action clamping cylinder and the pallet clamped thereon.

7. Method according to any of the Claims 1 to 3 and 7, **characterised in that** due to the discharge of compressed air in one blow from said transverse bore (40, 43) of said feed nipple (4) the pressure of the compressed air is reduced instantaneously, with the acceleration in extension of said feed nipple being abruptly terminated when said quick-action clamping cylinder is released and, as a consequence, with the extension rate of said feed nipple not increasing further, so that said feed nipple cannot perform a projectile-like extending movement even in the unloaded condition.

8. Device for blowing out and rinsing contaminations from the surface of a quick-action clamping cylinder and the functional units disposed thereon, with said quick-action clamping cylinder consisting essentially of a housing, a cover, fastening screws, a piston, tensioning springs and a feeding nipple for clamping a pallet (37), **characterised in that** said quick-action clamping cylinder (1) comprises a compressed-air supply system consisting of a compressed-air port (11), transverse bores (12, 17, 27, 40 and 43), cross bores (13, 22), recesses (15, 18), longitudinal bores (28, 46) as well as discharge bores (18, 24, 25) and passages (26, 39).

9. Device according to Claim 8, **characterised in that** the recess (15) in said cover is disposed in an approximately circular peripheral arrangement on the latter's lower surface resting on said housing.

10. Device according to any of the Claims 8 and 9, **characterised in that** at least one cross bore (16), starting out from said recess (15), extends in an axial direction in said cover (3), into which at least one transverse bore (17) reaches radially from the outside towards the inside up to a recess (18) that is equally disposed in said cylinder cover in said bore (36) in a radial outward direction behind a recess for the Seeger circlip ring (20), with discharge bores, which start out from said circlip ring and are directed centrally upwards at an inclination, reaching into said bore (36).

11. Device according to Claim 10, **characterised in that** said blow-out bores (19) are disposed in a peripheral arrangement approximately in symmetry in an appropriate number and open below the upper edge of said bore (36).

12. Device according to any of the Claims 8 and 9, **characterised in that** the bores for receiving the fastening screw (7) in said cover (3) pass vertically through said peripheral recess (15) forming a circular channel and are distributed in an appropriate number over the surface of said cover of said quick-action clamping cylinder.

13. Device according to any of the Claims 8, 9 and 12, **characterised in that** said fastening screws (7) comprise continuously connected transverse bores (27) and a longitudinal bore (28), with said transverse bore (27) opening in the passage (26) that is continuously connected to said recess (15), and that said longitudinal bore (28) opens in the centre of the screw head of said fastening screw (7), thus forming a continuous channel from said recess (15) up to the surface of said quick-action clamping cylinder.

14. Device according to any of the Claims 8, 9 and 13, **characterised in that** said through bore for receiving said fastening screw (7) in said cover (3) is made with such a wide diameter that a passage (39) will be formed between the head of said fastening screw and the wall in the borehole, and that said bore for receiving said fastening screw is manufactured in an appropriate size in the region of the thread, such that a passage (26) will be formed between the outer wall of said cover (3) and said thread of said fastening screw (7).

15. Device according to any of the Claims 8, 9, 14 and 15, **characterised in that** cross bores (33 and 34) are distributed from the underside of said cover (3) around the periphery of said passage (39) in such a way that the cross bores (33 and 34) will open in said passage (39) and hence form a continuous channel between said recess (15) and the surface of said cover of said quick-action clamping cylinder.

16. Device according to any of the Claims 8, 9 and 12 to 15, **characterised in that** said fastening screw (7) is provided with at least one longitudinal groove (29) and one transverse groove (30) that permits the discharge of the compressed air from said passage (26) on the upper side of said cover of said quick-action clamping cylinder.

17. Device according to any of the Claims 8, 9 and 12 to 16, **characterised in that** a centring disk (8) receives a fastening screw (7), with said centring disk (8) being provided with at least one longitudinal groove (31) and at least one transverse groove (32) through which the compressed air may flow out from said passage (26) into said passage (39) and flow out to the surface of said cover of said cylinder.

18. Device according to any of the Claims 8, 9, **characterised in that** a cross bore (22) from said transverse bore (17) opens into a recess provided for receiving a blow-out ring (23, 54), and that the compressed air flows out through said blow-out bores (24, 55) that are disposed in an approximately annular arrangement on said blow-out ring.

19. Device according to any of the preceding Claims 8 to 18, **characterised in that** a blow-out ring (54) comprises blow-out bores (55) whose orifices are disposed in an approximately annular arrangement on the surface thereof, with said bores being formed partly vertically with respect to the surface of said blow-out ring (54) and partly at an inward and partly at an outward inclination relative to the vertical.

20. Device according to any of the preceding Claims 8 to 19, **characterised in that** said blow-out ring (54) forms a blow-out groove (56) between its radial outside contour (62) and the radial outside contour of the recess (63) for said blow-out ring (54) in said cover of said quick-action clamping cylinder (1).

21. Device according to any of the preceding Claims 8 to 20, **characterised in that** a blow-out groove (56) is oriented in an approximately vertical direction relative to the surface of said cover of said quick-action clamping cylinder (1).

22. Device according to any of the preceding Claims 8 to 21, **characterised in that** a blow-out groove (56) is oriented at an outward inclination relative to the vertical relative to the surface of said cover of said quick-action clamping cylinder (1).

23. Device according to any of the preceding Claims 8 to 22, **characterised in that** said blow-out ring (54) presents a recess (59) that extends in the radially outward region on the side facing said cover of said quick-action clamping cylinder (1).

24. Device according to any of the preceding Claims 8 to 23, **characterised in that** said blow-out ring (54) presents an O-ring (57) on its upper side.

25. Device according to any of the preceding Claims 8 to 24, **characterised in that** a nozzle (52) is disposed in the bottom of said piston in the region of the latter's longitudinal axis for supply of said longitudinal bore (41) of said feed nipple (4) with compressed air.

26. Device according to any of the preceding Claims 8 to 25, **characterised in that** the diameter of the bore in said nozzle (52) controls the distribution of pressure of the air pressure in the compressed-air supply system.

## Revendications

1. Procédé à purger et expulser des impuretés de la surface d'un cylindre de serrage à action rapide (1) et des unités fonctionnelles y disposées, audit cylindre de serrage à action rapide (1) étant formé essentiellement d'un carter (2), d'un couvercle (3), des vis de fixation (7), d'un piston (5), des ressorts tendeurs (6) et d'un nipple d'entrée (4) à serrer une palette (37), **caractérisé en ce qu'**un système d'alimentation en air comprimé, alimenté en air comprimé, réalise la distribution sélective de l'air comprimé à partir des orifices (19, 24, 25, 39, 40, 43) dudit cylindre de serrage à action rapide (1) à l'intérieur dudit cylindre de serrage à action rapide (1) aux fins de nettoyage, de protection d'encrassement ou de pollution au cours du changement d'outils et des pièce d'oeuvre, ainsi que des fonctions relatives à la sécurité, quand ledit cylindre de serrage à action rapide (1) est détendu.

2. Procédé selon la revendication 1, **caractérisé en ce que** ledit système d'alimentation en air comprimé divise l'air comprimé alimenté dans une pluralité d'unités d'alimentation.

3. Procédé selon une des deux revendications 1 et 2, **caractérisé en ce que** l'air comprimé alimenté est sélectivement déchargé non seulement en dehors des alésages de purge (19, 24, 25) et des passages (39) mais aussi en dehors des à alésages transversaux (40, 43), en éliminant ainsi des impuretés de la surface dudit cylindre de serrage à action rapide et ainsi de la surface d'appui de la palette serrée.

4. Procédé selon une quelconque des revendications précédentes, **caractérisé en ce que** de l'air comprimé est déchargé à travers des orifices de ceux alésages de décharge (24 et 25), qui se trouvent dans un plan inférieur à la surface d'appui des îlots (35) opposés à la surface d'appui de la palette même quand la palette est serrée, en créant ainsi un effet de nettoyage préliminaire par décharge de l'air comprimé avant la détente dudit cylindre de serrage.

5. Procédé selon une quelconque des revendications 1 à 3, **caractérisé en ce que** de l'air comprimé est déchargé des alésages de décharge (25) et des passages (26) dès que la palette est levée dudit cylindre de serrage, à un taux maximal d'écoulement de l'air comprimé étant achevé au moment, auquel la palette est levée, en vertu de l'écart minimal entre la palette et ladite surface d'appui dudit cylindre de serrage à action rapide, et ainsi à l'effet de nettoyage maximal possible étant achevé à ce moment, ce qui est répété en succession inverse aussi quand la palette est serrée, aux impuretés ou aux copeaux de forage, qui s'y adhèrent éventuellement, étant soufflés non seulement de la palette mais aussi en dehors dudit cylindre de serrage à action rapide.

6. Procédé selon une quelconque des revendications 1 à 3, **caractérisé en ce que**, quand ledit cylindre de serrage à action rapide est relâché, ledit nipple d'entrée (4, 42, 48) décharge de l'air comprimé brusquement à travers son alésage longitudinal (41, 46) et son alésage transversal (40, 43), en créant ainsi un effet de pure pour ledit cylindre de serrage à action rapide et pour la palette y serrée.

7. Procédé selon une quelconque des revendications 1 à 3 et 7, **caractérisé en ce que**, grâce à la décharge brusque de l'air comprimé en dehors dudit alésage transversal (40, 43) dudit nipple d'entrée (4), la pression de l'air comprimé est réduite de façon instantanée, à l'accélération en sortie nipple d'entrée étant brusquement terminée, quand ledit cylindre de serrage à action rapide est relâche, et, en conséquence, à la vitesse de sortie dudit nipple d'entrée ne s'augmentant plus, de façon, que ledit nipple d'entrée ne puisse pas subir un mouvement de sortie de manière d'un projectile, même en état non chargé.

8. Dispositif à purger et expulser des impuretés de la surface d'un cylindre de serrage à action rapide et des unités fonctionnelles y disposées, audit cylindre de serrage à action rapide étant formé essentiellement d'un carter, d'un couvercle, des vis de fixation, d'un piston, des ressorts tendeurs et d'un nipple d'entrée à serrer une palette, **caractérisé en ce que** ledit cylindre de serrage à action rapide (1) comprend un système d'alimentation en air comprimé, qui est composé d'un raccord de l'air comprimé (11), des alésages transversaux (12, 17, 27, 40 et 43), des alésages transversaux (13, 22), des encoches (15, 18), des alésage longitudinaux (28, 46) ainsi que des alésages de décharge (18, 24, 25) et des passages (26, 39).

9. Dispositif selon la revendication 8, **caractérisé en ce que** l'encoche (15) dans ledit couvercle est disposé en un arrangement périphérique circulaire environ sur la surface inférieure du couvercle, qui s'appuie sur ledit carter.

10. Dispositif selon une quelconque des revendications 8 et 9, **caractérisé en ce qu'**au moins un alésage transversal (16), qui commence à ladite encoche (15), s'étend en sens axial dans ledit couvercle (3), dans lequel au moins un alésage transversal (17) s'étend de l'extérieur vers l'intérieur jusqu'à une encoche (18), qui est également formée dans ledit couvercle du cylindre dans ledit alésage (36) en un sens radial vers l'extérieur en arrière d'une encoche pour un circlip de Truarc (20), aux alésages de décharge, qui commencent audit circlip de Truarc et s'étendent, à orientation centralement en haut à une pente dans ledit alésage (36).

11. Dispositif selon la revendication 10, **caractérisé en ce que** lesdits alésages de purge (19) sont disposés en un arrangement périphérique, en symétrie, environ, en un nombre approprié, et s'ouvrent au-dessous du bord supérieur dudit alésage (36).

12. Dispositif selon une quelconque des revendications 8 et 9, **caractérisé en ce que** lesdits alésages à recevoir la vis de fixation (7) dans ledit couvercle (3) s'étendent en sens vertical à travers ladite encoche périphérique (15), en formant un passage circulaire, et sont distribués en nombre approprié sur la surface dudit couvercle dudit cylindre de serrage à action rapide.

13. Dispositif selon une quelconque des revendications 8, 9 et 12, **caractérisé en ce que** lesdites vis de fixation (7) comprennent des alésages transversaux (27) raccordés en continu et un alésage longitudinal (28), audit alésage transversal (27) s'ouvrant dans le passage (26) qui est raccordé en continu à ladite encoche (15), et **en ce que** ledit alésage longitudinal (28) s'ouvre dans le centre de la tête de vis de ladite vis de fixation (7), en formant ainsi un passage continu à partir de ladite encoche (15) jusqu'à la surface dudit cylindre de serrage à action rapide.

14. Dispositif selon une quelconque des revendications 8, 9 et 13, **caractérisé en ce que** ledit alésage de passage à recevoir ladite vis de fixation (7) dans ledit couvercle (3) est fait à un diamètre si grand qu'un passage (39) soit formé entre la tête de ladite vis de fixation et la paroi dans ladite forure, et **en ce que** l'alésage à recevoir ladite vis de fixation dans la zone du filetage est fait aux dimensions appropriées de façon à former un passage (26) entre la paroi extérieure dudit couvercle (3) et le filetage de ladite vis de fixation (7).

15. Dispositif selon une quelconque des revendications 8, 9, 14 et 15, **caractérisé en ce que** des alésage transversaux (33 et 34) sont distribués, à partir de la surface inférieure dudit couvercle (3) autour de la périphérie dudit passage (39) d'une façon, que des alésage transversaux (33 et 34) s'ouvrent dans ledit passage (39), en formant ainsi un passage continu entre ladite encoche (15) et la surface dudit couvercle dudit cylindre de serrage à action rapide.

16. Dispositif selon une quelconque des revendications 8, 9 et 12 à 15, **caractérisé en ce que** ladite vis de fixation (7) est munie d'au moins une rainure longitudinale (29) et une rainure transversale (30), qui permet le décharge de l'air comprimé en dehors dudit passage (26) à la surface supérieure dudit couvercle dudit cylindre de serrage à action rapide.

17. Dispositif selon une quelconque des revendications 8, 9 et 12 à 16, **caractérisé en ce qu'**un disque de centrage (8) reçoit une vis de fixation (7), ce disque de centrage (8) étant muni d'au moins une rainure longitudinale (31) et d'au moins une rainure transversale (32), à travers laquelle de l'air comprimé peut s'écouler en dehors dudit passage (26) et entrer dans ledit passage (39) et peut sortir à la surface dudit couvercle dudit cylindre.

18. Dispositif selon une quelconque des revendications 8, 9, **caractérisé en ce qu'**un alésage en croix (22) s'étendant à partir dudit alésage transversal (17) s'ouvre dans une encoche formée afin de recevoir anneau de purge (23, 54), et **en ce que** de l'air comprimé sort à travers lesdits alésages de purge (24, 55) qui sont disposés en un arrangement annulaire environ sur ledit anneau de purge.

19. Dispositif selon une quelconque des revendications précédentes 8 à 18, **caractérisé en ce qu'**un anneau de purge (54) comprend des alésages de purge (55), dont les orifices sont disposés en un arrangement annulaire environ sur sa surface, auxdites alésage étant formés, en partie, en position verticale relativement à la surface dudit anneau de purge (54) et, en partie, en une position inclinée vers l'extérieur relativement à la verticale.

20. Dispositif selon une quelconque des revendications précédentes 8 à 19, **caractérisé en ce que** ledit anneau de purge (54) constitue une rainure de purge (56) entre son contour radial extérieur (62) et le contour radial extérieur de l'encoche (63) pour ledit anneau de purge (54) dans ledit couvercle dudit cylindre de serrage à action rapide (1).

21. Dispositif selon une quelconque des revendications précédentes 8 à 20, **caractérisé en ce qu'**une rainure de purge (56) est orientée en un sens vertical environ, relativement à la surface dudit couvercle dudit cylindre de serrage à action rapide (1).

22. Dispositif selon une quelconque des revendications précédentes 8 à 21, **caractérisé en ce qu'**une rainure de purge (56) est orientée à une inclinaison vers l'extérieur, relativement à la verticale relative à la surface dudit couvercle dudit cylindre de serrage à action rapide (1).

23. Dispositif selon une quelconque des revendications précédentes 8 à 22, **caractérisé en ce que** ledit anneau de purge (54) présente une encoche (59), qui s'étend dans la zone radialement extérieure au côté en face dudit couvercle dudit cylindre de serrage à action rapide (1).

24. Dispositif selon une quelconque des revendications précédentes 8 à 23, **caractérisé en ce que** ledit anneau de purge (54) présente un joint torique d'étanchéité (57) à sa face supérieure.

25. Dispositif selon une quelconque des revendications précédentes 8 à 24, **caractérisé en ce qu'**un injecteur (52) est disposé dans le fond dudit piston dans la zone de l'axe longitudinal du dernier pour l'alimentation dudit alésage longitudinal (41) dudit nipple d'entrée (4) en air comprimé.

26. Dispositif selon une quelconque des revendications précédentes 8 à 25, **caractérisé en ce que** le diamètre de l'alésage dans ledit injecteur (52) commande la distribution de pression de la pression d'air dans le système d'alimentation en air comprimé.
